# EUROPÄISCHE PATENTSCHRIFT

(11) **EP 1 128 971 B1**
(45) Veröffentlichungstag und Bekanntmachung des Hinweises auf die Patenterteilung: **25.09.2002**
(21) Anmeldenummer: 99952550.4
(22) Anmeldetag: 12.10.1999
(51) Int. Cl.: B60C 17/00

(54) **FAHRZEUGLUFTREIFEN**
PNEUMATIC TIRES FOR A MOTOR VEHICLE
PNEUMATIQUES POUR VEHICULE

(30) Priorität: 12.10.1998 DE 19846854
(43) Veröffentlichungstag der Anmeldung: 05.09.2001
(73) Patentinhaber: Dunlop GmbH, 63450 Hanau (DE)
(72) Erfinder: BAUMANN, Karlheinz, D-63571 Gelnhausen (DE); DIETRICH, Günter, D-60431 Frankfurt (DE)
(74) Vertreter: Manitz, Finsterwald & Partner GbR
(86) Internationale Anmeldenummer: EP9907630
(87) Internationale Veröffentlichungsnummer: WO00021763

(56) Entgegenhaltungen:
- EP-A- 0 542 252
- EP-A- 0 590 482
- EP-A- 0 822 105

## Beschreibung

Die Erfindung betrifft Fahrzeugluftreifen nach dem Oberbegriff des Patentanspruchs 1.

Fahrzeugluftreifen dieser Art sind beispielsweise bekannt aus der gattungsbildenden EP-A-0 590 482. Mittels derartiger Reifen ist es möglich, im Falle einer Reifenpanne auch mit entlüftetem Reifen noch größere Strecken mit adäquater Geschwindigkeit zurückzulegen bevor eine Reparatur des Reifens oder ein Reifenwechsel vorgenommen werden muß. Derartige Reifen erhöhen demgemäß die Sicherheit im Falle einer Reifenpanne und ermöglichen es, problemfrei die nächste Reparaturwerkstätte zu erreichen, so daß unerwünschte und auf stark befahrenen Straßen auch gefährliche Reifenwechsel vermieden werden können.

Aufgabe der vorliegenden Erfindung ist es, einen Fahrzeugluftreifen der eingangs angegebenen Art so auszugestalten, daß auch im entlüfteten Zustand eine hohe Fahrleistung mit ausreichend hoher Geschwindigkeit ermöglicht wird, die in den Seitenwänden vorgesehenen versteifenden Gummilagen den Fahrkomfort des mit Normaldruck betriebenen Reifens nicht störend beeinträchtigen und dabei das Reifengewicht möglichst gering bleibt.

Ausgehend von den bekannten Fahrzeugluftreifen wird diese Aufgabe nach der Erfindung dadurch gelöst daß die um den jeweiligen Wulstring geführten Enden der ersten Karkasslage mit der Innenseite der sich bis zum Wulstring erstreckenden radial äußeren zweiten Karkasslage überlappend verbunden sind, daß das radial innere Ende der zweiten Gummiverstärkungslage gleichzeitig als Kernreiter ausgebildet ist und das verdickte Ende dieser Gummiverstärkungslage einen Kernreiterbereich bildet und daß zwischen den umgeschlagenen Enden der ersten Karkasslage und dem einen Kernreiterbereich bildenden Ende der jeweiligen zweiten Gummiverstärkungslage ein Verstärkungs- bzw. Versteifungsstreifen vorgesehen ist.

Aufgrund der Wahl der Gummimischung, des Dickenverlaufs der Gummiverstärkungslagen und der jeweils in Abhängigkeit von der Position der Gummiverstärkungslagen im Reifen unterschiedlichen Härtezahlen dieser Gummiverstärkungslagen werden hinsichtlich der Langlaufeigenschaften bei entlüftetem Reifen optimale Werte erhalten, insbesondere wenn aufgrund der verwendeten Mischungen und der gewählten Härtezahl im fertigen Reifen der Elastizitätsmodul E* der Gummiverstärkungslagen sowie des Kernreiters gemessen bei 70°C gleich oder größer 9 MPa und der tanδ gleich oder kleiner 0,03 ist (gemessen mittels "EPLEXOR", 10 Hz, 10 % Vorspannung und 1 % DSA). Die Härte IRHD dieser Gummiverstärkungslagen sowie des Kernreiters soll bei Raumtemperatur gemessen gleich oder größer 80 sein. Die Messung der IRDH (International Rubber Hardness Degree) erfolgt dabei analog der Shore-Härtemessung, jedoch mit kugelförmiger Meßspitze. Die Messung bzw. Prüfung erfolgt dabei nach DIN 53519, wobei die sogenannte Mikrohärte bestimmt wird, da kleine Proben gemessen werden, die aus dem jeweiligen Reifen entnommen sind.

Die Gummiverstärkungslagen und die Kernreiter bzw. die integral mit einer Gummiverstärkungslage ausgebildeten Kernreiterbereiche werden bevorzugt aus einer Gummimischung hergestellt, die aus einem Polymerverschnitt aus NR/IR und BR besteht, wobei mindestens 50 Teile NR/IR in diesem Polymerverschnitt enthalten sind, einem Rußgehalt von 50 bis 60 Teilen, vorzugsweise aus schnellspritzbarem FEF-Ruß, sowie aus 5 bis 8 Teilen Zinkoxid, 2 Teilen Stearinsäure, 1,5 Teilen Alterungsschutzmittel sowie ein oder mehr Teile Vulkanisationsbeschleuniger und Schwefel (vorzugsweise 4 bis 5 Teile), um die Verlusteigenschaften der Mischung gering zu halten.

Für den Fall, daß das radiale innere Ende der äußeren Gummiverstärkungslage gleichzeitig als Kernreiter ausgebildet ist, ist vorgesehen, daß gemessen im Bereich maximaler Wulstdicke (Seitenwandhöhe W) die Dikke der inneren Gummiverstärkungslage etwa 4,4 mm und der äußeren Gummiverstärkungslage etwa 8,7 mm beträgt, wobei für alle Meßwerte eine Toleranz von +/-0,5 mm gilt.

Weitere vorteilhafte Ausgestaltungen der Erfindung sind in Unteransprüchen angegeben.

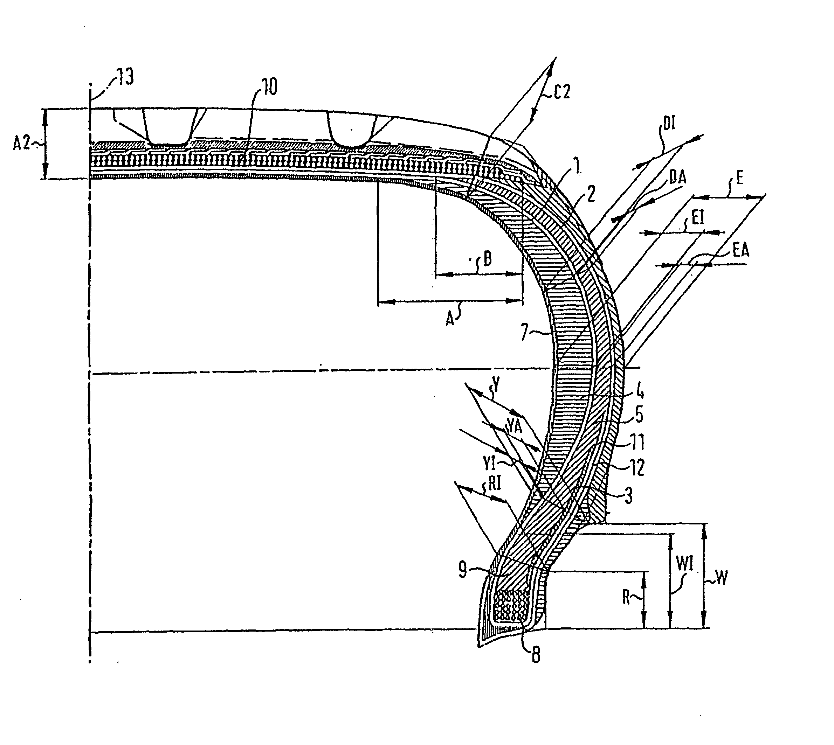

Die Erfindung wird nachfolgend anhand eines Ausführungsbeispiels unter Bezugnahme auf die Zeichnung näher erläutert; die Zeichnung zeigt dabei eine schematische Axialschnittdarstellung einer Hälfte eines mittensymmetrisch ausgebildeten Reifens nach der Erfindung.

Nach der Zeichnung besitzt der Reifen eine zweilagige Karkasse, die aus einer innenliegenden Karkasslage 1 und einer radial äußeren Karkasslage 2 besteht.

Die innere Karkasslage 1 ist um den Wulst 8 geführt und erstreckt außenseitig mit diesem Endbereich 11 über etwa ein Drittel der Reifenhöhe und ist unter Ausbildung eines Überlappungsbereichs mit der radial äußeren Karkasslage 2 verbunden.

Im Überlappungsbereich der beiden Karkasslagen 1, 2 ist axial innen angrenzend an den Überlappungsbereich 11 der ersten bzw. inneren Karkasslage 1 ein Verstärkungs- bzw. Versteifungsstreifen 3 vorgesehen, der aus einem textilen Material bestehen kann und sich bis in die unmittelbare Nähe des Wulstrings 8 erstreckt.

Eine erste Gummiverstärkungslage 4 ist innerhalb der ersten Karkasslage 1 und zwischen dieser ersten Karkasslage 1 und einer Innengummierungsschicht 7 angeordnet.

Eine zweite Gummiverstärkungslage 5 befindet sich zwischen der ersten Karkasslage 1 und der zweiten oder radial äußeren Karkasslage 2.

Von wesentlicher Bedeutung für die Laufleistung des Reifens im entlüfteten Zustand sowie auch für das Verhalten im Normallauf ist einerseits die Ausgestaltung der Gummiverstärkungslagen hinsichtlich ihrer radialen Höhe und ihres Dickenverlaufs über die Höhe und zum anderen die für die Gummiverstärkungslagen verwendete Mischung.

Die beiden Gummiverstärkungslagen 4, 5 besitzen über ihre Höhe jeweils einen ausgeprägt unterschiedlichen Dickenverlauf.

Während die erste Gummiverstärkungslage etwa in Wulsthöhe WI spitz ausläuft, ist das radial innere Ende der zweiten Gummiverstärkungslage 5 praktisch als Kernreiterbereich 9 ausgebildet, d.h. diese Gummiverstärkungslage 5 nimmt ausgehend von dem Bereich halber Reifenhöhe in Richtung des Wulstes in ihrer Dicke zu und erreicht am Wulst 8 die Dikkenabmessung dieses Wulstes 8.

Die Gummiverstärkungslagen bestehen aus einer Gummimischung aus Verschnitten von NR und/oder IR und BR sowie Ruß, Zinkweiß, Stearinsäure, Alterungsschutzmittel, Weichmacher, Schwefel und Beschleuniger. Bevorzugt werden Verstärkungslagen und Kernreiter hergestellt aus einer Gummimischung, bestehend aus einem Polymerverschnitt aus NR/IR und BR mit mindestens 50 Teilen NR/IR, einem Rußgehalt von 50 bis 60 Teilen, 5 bis 8 Teilen Zinkoxid, 2 Teilen Stearinsäure, 1,5 Teilen Alterungsschutzmittel sowie zumindest ein Teil Vulkanisationsbeschleuniger und Schwefel. Es werden bevorzugt 4 bis 5 Teile Schwefel verwendet, um die Verlusteigenschaften der Mischung gering zu halten.

Die für die Gummiverstärkungslagen und den Kernreiter bzw. den Kernreiterbereich bestimmte Gummimischung muß in der Weise gehärtet werden, daß die Gummiverstärkungslagen im fertigen Reifen folgende Eigenschaften besitzen:

Härte IRDH größer gleich 80, gemessen bei Raumtemperatur, Elastizitätsmodul (MPa) größer gleich 9 MPa und tan8 kleiner gleich 0,03, gemessen jeweils bei 70°C und mittels "EPLEXOR", 10 Hz, 10 % Vorspannung, 1 % DSA (Double Strain Amplitude).
Die IRDH-Messung (International Rubber Hardness Degree) erfolgt gemäß Prüfmethode DIN 53519 Blatt 2.

In der eine bevorzugte Ausführungsform der Erfindung darstellenden Zeichnung sind Meßstellen positionsgenau eingetragen, anhand derer für die Erfindung wesentliche Dickenwerte und Positionen angegeben werden können.

Die Reifendicke A2 in Kronenmitte beträgt bevorzugt 16,5 ± 0,8 mm, während die Reifendicke C2 an der Schulter an der angegebenen Stelle 18,0 ± 1,0 mm beträgt. Die Dicke Y des Wulstes beträgt an der angegebenen Stelle 14,0 ± 1,5 mm, während sich die Wulstdicke R1 an der angegebenen Stelle in Höhe des Maßes R auf 14,0 ± 1,5 mm beläuft.

Die Messung der Wulstdicke Y erfolgt in Höhe des in der Zeichnung eingetragenen Maßes W, wobei die Meßebene wie in der Zeichnung angegeben verläuft.

Die Gummiverstärkungslagen 4, 5 besitzen über ihre radiale Höhe einen aus der Zeichnung ersichtlichen charakteristischen Dickenverlauf, der durch die in der Zeichnung an den angegebenen Meßstellen vorhandenen Dickenwerte charakterisiert ist.

An der Meßstelle D, die etwa in Höhe von zwei Drittel der Seitenwandhöhe gelegen ist, besitzt die innere Gummiverstärkungslage 4 eine Dicke von 5,8 ± 0,8 mm und die äußere Gummiverstärkungslage 5 eine Dicke von 2,9 ± 0,5 mm.

An der Meßstelle E in halber Seitenwandhöhe beträgt die Dicke der inneren Gummiverstärkungslage 6,2 ± 0,5 mm und die Dicke der äußeren Gummiverstärkungslage beträgt 3,1 ± 0,5 mm.

An der Meßstelle Y besitzt in der angegebenen Ebene die innere Gummiverstärkungslage 4 eine Dicke von 4,4 ± 0,5 mm und die äußere Gummiverstärkungslage 5, die in diesem Bereich gleichzeitig als Kernreiter ausgebildet ist, besitzt an dieser Stelle eine Dicke von 8,7 ± 0,5 mm. Zwischen den bezüglich der definierten Meßstellen angegebenen Werten verändern sich die Dicken der Gummiverstärkungslagen 4, 5 kontinuierlich.

Der in der Zeichnung angegebene Wert R (Wulst) beträgt 14,0 ± 1,5 mm, während die Wulsthöhe WI 22,0 ± 5,0 mm beträgt.

Hinsichtlich der Überdeckung der Gummiverstärkungslagen 1, 2 im radial äußeren Bereich durch die Gürtellagen 10 ist der Wert A für die innere Gummiverstärkungslage 4 mit 33,0 ± 2,5 mm und der Wert B für die äußere Gummiverstärkungslage 5 mit 15,0 ± 2,5 mm anzugeben.

## Patentansprüche

1. Fahrzeugluftreifen mit einer Mehrlagenkarkasse, die sich zwischen zwei zugeordnete Kernreiter (9) aufweisenden Wulstringen (8) erstreckt,
einer zwischen den Karkasslagen (1, 2) und einem Laufstreifen vorgesehenen Gürtelanordnung (10) sowie in den Seitenwandbereichen angeordneten und bei entlüftetem Reifen Stützfunktion übernehmenden Gummiverstärkungslagen (4, 5),
einer ersten Gummiverstärkungslage (4), die radial innerhalb einer ersten Karkasslage (1) und einer zweiten Gummiverstärkungslage (5), die zwischen der ersten Karkasslage (1) und einer zweiten Karkasslage (2) angeordnet ist,
wobei sich die zwei Gummiverstärkungslagen (4, 5) ausgehend vom Kernreiterbereich mit gegeneinander versetzten Enden bis unter den Randbereich der Gürtellage (10) erstrecken,
die zwei Gummilagen (4, 5) in Radialrichtung insbesondere unterschiedliche Höhe und über die Seitenwandhöhe ausgeprägt unterschiedliche Dicken aufweisen,
und die radial innere erste Karkasslage (1) mit ihren Enden (11) um den jeweiligen Wulstring (8) geführt ist,
**dadurch gekennzeichnet,**
**daß** die um den jeweiligen Wulstring (8) geführten Enden der ersten Karkasslage (1) mit der Innenseite der sich bis zum Wulstring (8) erstreckenden radial äußeren zweiten Karkasslage (2) überlappend verbunden sind,
**daß** das radial innere Ende der zweiten Gummiverstärkungslage (5) gleichzeitig als Kernreiter ausgebildet ist und das verdickte Ende dieser Gummiverstärkungslage (5) einen Kernreiterbereich (9) bildet und
**daß** zwischen den umgeschlagenen Enden der ersten Karkasslage (1) und dem einen Kernreiterbereich (9) bildenden Ende der jeweiligen zweiten Gummiverstärkungslage (5) ein Verstärkungs- bzw. Versteifungsstreifen (3) vorgesehen ist

2. Fahrzeugluftreifen nach Anspruch 1,
**dadurch gekennzeichnet,**
**daß** die erste Gummiverstärkungslage (4) zumindest radial oberhalb des umgeschlagenen Endes (11) der ersten Karkasslage (1) stets eine größere Dicke als die zweite Gmmiverstärkungslage (5) besitzt und
**daß** das laufflächenseitige Ende der zweiten Gummiverstärkungslage (4) bezüglich der Reifenmittenebene (13) einen größeren Abstand besitzt als das entsprechende Ende der ersten Gummiverstärkungslage (4) und daß beide Enden unterhalb der Gürtellagen (10) gelegen sind.

3. Fahrzeugluftreifen nach einem der vorhergehenden Ansprüche,
**dadurch gekennzeichnet,**
**daß** die radial äußere Gummiverstärkungslage (5) mit ihrem radial inneren Ende an der Innenseite eines Kernreiters anliegt.

4. Fahrzeugluftreifen nach einem der vorhergehenden Ansprüche,
**dadurch gekennzeichnet,**
**daß** die Karkasslagen (1,2) aus Rayon bestehen.

5. Fahrzeugluftreifen nach einem der vorhergehenden Ansprüche,
**dadurch gekennzeichnet,**
**daß** die Gürtellagen (10) aus Kevlar oder Stahl bestehen.

6. Fahrzeugluftreifen nach Anspruch 10,
**dadurch gekennzeichnet,**
**daß** der Gürtel durch Zusatzgummi zwischen den Gürtellagen (10) versteift ist.

7. Fahrzeugluftreifen nach einem der vorhergehenden Ansprüche,
**dadurch gekennzeichnet,**
**daß** die Gummiverstärkungslagen (4, 5) sowie der Kernreiterbereich (9) aus der gleichen Gummimischung bestehen.

8. Fahrzeugluftreifen nach einem oder mehreren der vorhergehenden Ansprüche,
**dadurch gekennzeichnet,**
**daß** der Elastizitätsmodul (E*) der Gummiverstärkungslagen (4, 5) sowie des Kernreiters oder des Kernreiterbereichs (9) gemessen bei 70°C gleich oder größer 9 MPa und der tanδ gleich oder kleiner 0,03 ist, und zwar gemessen mittels "EPLEXOR": 10 Hz, 10 % Vorspannung und 1 % DSA (Double Strain Amplitude).

9. Fahrzeugluftreifen nach Anspruch 8,
**dadurch gekennzeichnet,**
**daß** die Härte IRHD der Gummiverstärkungslagen (4, 5) sowie des Kernreiters oder Kernreiterbereichs (9) bei Raumtemperatur gemessen gleich oder größer 80 ist, wobei die Messung nach DIN 53915 erfolgt und dem Reifen entnommene kleine Proben gemessen werden.

10. Fahrzeugluftreifen nach Anspruch 9,
**dadurch gekennzeichnet,**
**daß** zumindest die Gummiverstärkungslagen (4, 5) aus einer Gummimischung bestehen, die sich aus einem Polymerverschnitt aus NR/IR und BR mit mindestens 50 Teilen NR/IR, einem Rußgehalt von 50 bis 60 Teilen, 5 bis 8 Teilen Zinkoxid, 2 Teilen Stearinsäure, 1,5 Teilen Alterungsschutzmittel sowie zumindest einem Teil Vulkanisationsbeschleuniger und Schwefel zusammensetzt, wobei der Schwefelanteil vorzugsweise 4 bis 5 Teile umfaßt und als Ruß vorzugsweise schnellspritzbarer FEF-Ruß verwendet ist.

11. Fahrzeugluftreifen nach einem der vorhergehenden Ansprüche,
**dadurch gekennzeichnet,**
**daß** die eine sich kontinuierlich ändernde Dicke aufweisenden Gummiverstärkungslagen (4, 5) in der Summe ihre größte Dicke im Bereich der halben Seitenwandhöhe sowie im oberen Drittel der Seitenwandhöhe besitzen.

12. Fahrzeugluftreifen nach einem der vorhergehenden Ansprüche,
**dadurch gekennzeichnet,**
**daß** gemessen in etwa zwei Drittel der Seitenwandhöhe und in halber Seitenwandhöhe die Dicke der inneren Gummiverstärkungslage (4) 5,8 bzw. 6,2 mm und der äußeren Gummiverstärkungslage (5) 2,9 bzw. 3,1 mm beträgt, wobei für den ersten Meßwert von 5,8 mm eine Toleranz von ± 0,8 mm und für alle anderen Meßwerte eine Toleranz von gilt ± 0,5 mm gilt.

13. Fahrzeugluftreifen nach einem der vorhergehenden Ansprüche,
**dadurch gekennzeichnet,**
**daß** gemessen im Bereich maximaler Wulstdicke (Seitenwandhöhe W, Meßebene Y) die Dicke der inneren Gummiverstärkungslage (4) etwa 4,4 mm und der äußeren Gummiverstärkungslage (5) etwa 8,7 mm beträgt, wobei für alle Meßwerte eine Toleranz von ± 0,5 mm gilt.

14. Fahrzeugluftreifen nach einem der vorhergehenden Ansprüche,
**dadurch gekennzeichnet,**
**daß** die in der Reifenmitte gemessene Kronendicke (A2) 16,5 ± 0,8 mm und die im Übergangsbereich der Schulter und im Bereich der Enden der Gummiverstärkungslagen (4, 5, 6) gemessene Reifendicke (C2) 18,0 ± 1,0 mm beträgt.

## Claims

1. Pneumatic vehicle tire comprising a multi-ply carcass, which extends between two bead rings (8) having associated bead apexes (9), a belt arrangement (10) provided between the carcass plies (1, 2) and a tread strip and rubber reinforcing plies (4, 5) arranged in the side wall regions, which take on a supporting function with a deflated tire,
a first rubber reinforcing ply (4) which is arranged radially within a first carcass ply (1), and a second rubber reinforcing ply (5) which is arranged between the first carcass ply (1) and a second carcass ply (2),
wherein the two rubber reinforcing plies (4, 5) extend, starting from the bead apex region and with mutually displaced ends, up to and beneath the edge region of the belt ply (10),
the two rubber plies (4, 5) have in particular a different height in the radial direction and pronouncedly different thicknesses over the height of the side wall,
and the ends (11) of the radially inner, first carcass ply (1) are led around the respective bead ring (8)
**characterized in that** the ends of the first carcass ply (1) led around the respective bead ring (8) are overlappingly connected to the inner side of the radially outer second second carcass ply (2) extending up to the bead ring (8);
**in that** the radially inner end of the second rubber reinforcing ply (5) is simultaneously made as a bead apex and the thickened end of this rubber reinforcing ply (5) forms a bead apex region (9); and
**in that** a reinforcing or stiffening strip (3) is provided between the turned over end of the first carcass ply (1) and the end of the respective second rubber reinforcing ply (5) forming a bead apex region (9).

2. Pneumatic vehicle tire in accordance with claim 1, **characterized in that** the first rubber reinforcing ply (4) always has a greater thickness than the second rubber reinforcing ply (5), at least radially above the turned over end (11) of the first carcass ply (1); and **in that** the tread end of the second rubber reinforcing ply (4) has a greater distance from the central plane (13) of the tire than the corresponding end of the first rubber reinforcing ply (4); and **in that** both ends are disposed beneath the belt plies (10).

3. Pneumatic vehicle tire in accordance with any one of the preceding claims, **characterized in that** the radially inner end of the radially outer rubber reinforcing ply (5) contacts the inner side of a bead apex.

4. Pneumatic vehicle tire in accordance with any one of the preceding claims, **characterized in that** the carcass plies (1, 2) consist of rayon.

5. Pneumatic vehicle tire in accordance with one of the preceding claims, **characterized in that** the belt plies (10) consist of Kevlar or steel.

6. Pneumatic vehicle tire in accordance with claim 5, **characterized in that** the belt is stiffened by additional rubber between the belt plies (10).

7. Pneumatic vehicle tire in accordance with any one of the preceding claims, **characterized in that** the rubber reinforcing plies (4, 5) and the bead apex region (9) consist of the same rubber mixture.

8. Pneumatic vehicle tire in accordance with one or more of the preceding claims, **characterized in that** the modulus of elasticity (E*) of the rubber reinforcing plies (4, 5) and of the bead apex or of the bead apex region (9) are the same as or greater than 9 MPa when measured at 70°C and the tanδ is the same as or smaller than 0.03, and indeed when measured by means of "EPLEXOR": 10 Hz, 10 % prestress and 1 % DSA (double strain amplitude).

9. Pneumatic vehicle tire in accordance with claim 8, **characterized in that** the hardness IRHD of the rubber reinforcing plies (4, 5) and of the bead apex or of the bead apex region (9) is the same as or greater than 80 when measured at room temperature, with the measurement taking place in accordance with DIN 53915 and small samples taken from the tire being measured.

10. Pneumatic vehicle tire in accordance with claim 9, **characterized in that** at least the rubber reinforcing plies (4, 5) consist of a rubber mixture which is composed of a polymer mix of NR/IR, with at least 50 parts NR/IR and BR having a carbon black content of 50 to 60 parts, 5 to 8 parts zinc oxide, 2 parts stearic acid, 1.5 parts of aging protection agent, and at least one part of vulcanization accelerator and sulfur, with the proportion of sulfur preferably comprising 4 to 5 parts and FEF carbon black which is capable of being sprayed quickly, preferably being used as the carbon black.

11. Pneumatic vehicle tire in accordance with any one of the preceding claims, **characterized in that** the rubber reinforcing plies (4, 5), which have a continuously changing thickness, have in sum total their greatest thickness in the region of the half side wall height, and in the upper third of the side wall height.

12. Pneumatic vehicle tire in accordance with any one of the preceding claims, **characterized in that**, when measured at approximately two thirds of the side wall height and at the half side wall height, the thickness of the inner rubber reinforcing ply (4) amounts to 5.8 and 6.2 mm respectively and the thickness of the outer rubber reinforcing ply (5) amounts to 2.9 and 3.1 mm respectively, with a tolerance of ± 0.8 mm applying to the first measured value of 5.8 mm and with a tolerance of ±0.5 mm applying to all other measured values.

13. Pneumatic vehicle tire in accordance with any one of the preceding claims, **characterized in that**, when measured in the region of the maximum bead thickness (side wall height W, measurement plane Y), the thickness of the inner rubber reinforcing ply (4) amounts to approximately 4.4 mm, and the thickness of the outer rubber reinforcing ply (5) amounts to approximately 8.7 mm, with a tolerance of ±0.5 mm applying to all measured values.

14. Pneumatic vehicle tire in accordance with one of the preceding claims, **characterized in that** the crown thickness (A2) measured at the tire center amounts to 16.5 ± 0.8 mm and the tire thickness (C2) measured in the transition region of the shoulder and in the region of the ends of the rubber reinforcing plies (4, 5, 6) amounts to 18.0 ± 1.0 mm.

## Revendications

1. Pneumatique de véhicule, comportant une carcasse à plusieurs couches qui s'étend entre deux tringles de talon (8) comprenant des bandelettes talon associées (9),
un agencement de ceinture prévu entre les couches de carcasse (1, 2) et une bande de roulement, ainsi que des couches de renforcement en caoutchouc (4, 5) agencées dans les zones de paroi latérale et remplissant des fonctions de soutien dans l'état dégonflé du pneumatique,
une première couche de renforcement en caoutchouc (4) qui est agencée radialement à l'intérieur d'une première couche de carcasse (1) et
une deuxième couche de renforcement en caoutchouc (5) qui est agencée entre la première couche de carcasse (1) et une deuxième couche de carcasse (2),
et les deux couches en caoutchouc (4, 5) s'étendent à partir de la zone de bandelette talon avec des extrémités décalées l'une par rapport à l'autre jusqu'au-dessous de la zone marginale de la couche de ceinture (10),
les deux couches en caoutchouc (4, 5) présentent des hauteurs différentes en direction radiale et des épaisseurs fortement différentes sur la hauteur de la paroi latérale, et
la première couche de carcasse (1) radialement intérieure est menée par ses extrémités (11) autour de la tringle de talon respective (8),
**caractérisé en ce que** :
les extrémités de la première couche de carcasse (1) menées autour de la tringle de talon respective (8) sont reliées en chevauchement au côté intérieur de la deuxième couche de carcasse (2) radialement extérieure s'étendant jusqu'à la tringle de talon (8),
l'extrémité radialement intérieure de la deuxième couche de renforcement en caoutchouc (5) est réalisée simultanément à titre de bandelette talon et l'extrémité épaissie de cette couche de renforcement en caoutchouc (5) forme une zone de la bandelette talon (9), et
il est prévu entre les extrémités rabattues de la première couche de carcasse (1) et une extrémité, formant une zone de la bandelette talon (9), de la deuxième couche de renforcement en caoutchouc respective (5), une bande de renforcement ou de rigidification (3).

2. Pneumatique de véhicule selon la revendication 1, **caractérisé en ce que** la première couche de renforcement en caoutchouc (4) présente, du moins radialement au-dessus de l'extrémité rabattue (11) de la première couche de carcasse (1), une épaisseur toujours supérieure à celle de la deuxième couche de renforcement en caoutchouc (5), et **en ce que** l'extrémité côté surface de roulement de la deuxième couche de renforcement en caoutchouc (4) présente par rapport au plan central du pneumatique (13) une distance supérieure à celle de l'extrémité correspondante de la première couche de renforcement en caoutchouc (4), et **en ce que** les deux extrémités se trouvent au-dessous des couches de ceinture (10).

3. Pneumatique de véhicule selon l'une des revendications précédentes, **caractérisé en ce que** la couche de renforcement en caoutchouc radialement extérieure (5) s'appuie par son extrémité radialement intérieure contre le côté intérieur d'une bandelette talon.

4. Pneumatique de véhicule selon l'une des revendications précédentes, **caractérisé en ce que** les couches de carcasse (1, 2) sont constituées en rayonne.

5. Pneumatique de véhicule selon l'une des revendications précédentes, **caractérisé en ce que** les couches de ceinture (10) sont constituées en Kevlar ou en acier.

6. Pneumatique de véhicule selon la revendication 1, **caractérisé en ce que** la ceinture est rigidifiée par un caoutchouc supplémentaire entre les couches de ceinture (10).

7. Pneumatique de véhicule selon l'une des revendications précédentes, **caractérisé en ce que** les couches de renforcement en caoutchouc (4, 5) ainsi que la zone de bandelette talon (9) sont constituées du même mélange de caoutchouc.

8. Pneumatique de véhicule selon l'une des revendications précédentes, **caractérisé en ce que** le module d'élasticité (E*) des couches de renforcement en caoutchouc (4, 5) ainsi que de la bandelette talon ou de la zone bandelette talon (9), mesuré à 70°C, est égal ou supérieur à 9 MPa et la valeur tank est égale ou inférieure à 0,03, et ceci par mesure au moyen du procédé "EPLEXOR" à 10 Hz, 10 % de précontrainte et 1 % DSA (Double Strain Amplitude).

9. Pneumatique de véhicule selon la revendication 8, **caractérisé en ce que** la dureté IRHD (degré international de dureté du caoutchouc) des couches de renforcement en caoutchouc (4, 5) ainsi que de la bandelette talon ou de la zone bandelette talon (9), mesurée à la température ambiante, est égale ou supérieure à 80, la mesure s'effectuant selon la norme DIN 53915 et en mesurant de petits échantillons prélevés du pneumatique.

10. Pneumatique de véhicule selon la revendication 9, **caractérisé en ce que** les couches de renforcement en caoutchouc (4, 5) au moins sont constituées en un mélange de caoutchouc qui se compose d'un mélange de polymères de NR/IR (caoutchouc naturel/caoutchouc isoprène) et BR (caoutchouc polybutadiène) avec au moins 50 parts de NR/IR, une teneur en noir de carbone de 50 à 60 parts, 5 à 8 parts d'oxyde de zinc, 2 parts d'acide stéarique, 1,5 part d'agent anti-vieillissement ainsi qu'au moins une part d'accélérateur de vulcanisation et de soufre, la part de soufre étant de préférence présente à raison de 4 à 5 parts et le noir de carbone étant de préférence du noir de carbone FEF à injection rapide.

11. Pneumatique de véhicule selon l'une des revendications précédentes, **caractérisé en ce que** les couches de renforcement en caoutchouc (4, 5) présentant une épaisseur qui se modifie en continu possèdent en somme leur épaisseur maximale dans la zone de la mi-hauteur de paroi latérale ainsi que dans le tiers supérieur de la hauteur de paroi latérale.

12. Pneumatique de véhicule selon l'une des revendications précédentes, **caractérisé en ce que** l'épaisseur de la couche intérieure de renforcement en caoutchouc (4), mesurée à environ deux tiers de la hauteur de paroi latérale et à mi-hauteur de paroi latérale, s'élève à 5,8 et à 6,2 mm, et celle de la couche extérieure de renforcement en caoutchouc (5) s'élève à 2,9 et à 3,1 mm, une tolérance de ± 0,8 mm s'appliquant à la première valeur de mesure de 5,8 mm et une tolérance de ± 0,5 mm s'appliquant à toutes les autres valeurs de mesure.

13. Pneumatique de véhicule selon l'une quelconque des revendications précédentes, **caractérisé en ce que** l'épaisseur de la couche intérieure de renforcement en caoutchouc (4), mesurée dans la zone où l'épaisseur de talon est maximale (hauteur de paroi latérale W, plan de mesure Y) s'élève à environ 4,4 mm, et celle de la couche extérieure de renforcement en caoutchouc (5) s'élève à environ 8,7 mm, une tolérance de ± 0,5 mm s'appliquant à toutes les valeurs de mesure.

14. Pneumatique de véhicule selon l'une des revendications précédentes, **caractérisé en ce que** l'épaisseur de couronne (A2) mesurée au milieu du pneumatique s'élève à 16,5 ± 0,8 mm, et l'épaisseur de pneumatique (C2) mesurée dans la zone de transition de l'épaulement et dans la zone des extrémités des couches de renforcement en caoutchouc (4, 5) s'élève à 18,0 ± 1,0 mm.
